# EUROPEAN PATENT APPLICATION

(11) **EP 4 542 811 A1**
(43) Date of publication of application: **23.04.2025**
(21) Application number: 22946643.8
(22) Date of filing: 22.12.2022
(51) Int. Cl.: H02J 3/28, H02J 3/46

(54) **PHOTOVOLTAIC SYSTEM AND OPTIMIZER NETWORKING METHOD THEREOF**

(30) Priority: 17.06.2022 CN 202210686214
(71) Applicant: Sungrow (Shanghai) Co., Ltd., Shanghai 201203 (CN)
(72) Inventor: XU, Chenjia, Shanghai 201203 (CN); YAO, Keliang, Shanghai 201203 (CN); YANG, Yu, Shanghai 201203 (CN); WANG, Xinyu, Shanghai 201203 (CN); TAO, Tinghuan, Shanghai 201203 (CN)
(74) Representative: Zacco Norway AS
(86) International application number: PCT/CN2022/140969
(87) International publication number: WO 2023/240978

(57) **Abstract**

The present application provides a photovoltaic system and an optimizer networking method thereof. The optimizer networking method comprises: first, an inverter sets for each optimizer an output voltage limit value and/or an output current limit value; and then the inverter controls each optimizer to be started, and then, according to a preset rule, controls input ends of corresponding Boost circuits to separately keep a short-circuited state for a preset duration. When the input end of a different Boost circuit is in the short-circuited state, only a photovoltaic string connected to the input end of the corresponding Boost circuit is short-circuited, so that an optimizer having changed output electrical parameters is an optimizer in the corresponding photovoltaic string, and thus an optimizer connected to the input end of each Boost circuit can be determined, thereby achieving automatic networking of optimizers connected in a photovoltaic system, and avoiding problems of errors being liable to occur and low efficiency when optimizer networking is achieved by means of manual input.

## Description

The present application claims priority to Chinese Patent Application No. 202210686214.3, titled "PHOTOVOLTAIC SYSTEM AND OPTIMIZER NETWORKING METHOD THEREOF", filed on June 17, 2022 with the China National Intellectual Property Administration, which is incorporated herein by reference in its entirety.

### FIELD

The present application relates to the technical field of photovoltaic power generation, and in particular to a photovoltaic system and an optimizer networking method for a photovoltaic system.

### BACKGROUND

An optimizer in a photovoltaic system, namely a photovoltaic power optimizer, is module-level power electronics (MLPE) with a direct-current input and a direct-current output. The optimizer is connected in series to a photovoltaic component, and adopts a current and voltage prediction technology, to ensure that the photovoltaic component always operates in an optimal state, and overcome influence of shadow on the components, inconsistent orientations or different electrical specifications of components on power generation capacity in a photovoltaic power station. In this way, a maximum power output of the photovoltaic component can be achieved and power generation capacity of the system can be improved.

In a photovoltaic power generation system provided with an optimizer, an inverter communicates with the optimizer through power line communication (PLC). The inverter includes a PLC master node controller, and the optimizer serves as a slave node of the PLC. Once the optimizer and the inverter are arranged in the system, a master node of the inverter needs to be informed of topological information of each optimizer in the inverter system, to facilitate instruction control and state positioning in a later operation process. If the inverter does not acquire the topological information of the optimizers thereof, the inverter may acquire, in a case of searching for the optimizers, information of optimizers in other systems due to a crosstalk problem, affecting determination of the master node of the inverter and leading to error control of the master node.

At present, the topological information of each optimizer requires to be manually entered in order. In this manner, the manual entry process in the optimizer networking has a low inefficient and is prone to error.

### SUMMARY

A photovoltaic system and an optimizer networking method for a photovoltaic system are provided according to the present application, to address the problem of low efficiency and error in the optimizer networking process due to manual entry.

In order to achieve the above objectives, technical solutions are provided according to the present application as follows.

In a first aspect of the present application, an optimizer networking method for a photovoltaic system is provided. The photovoltaic system includes an inverter and photovoltaic strings connected to Boost circuits at a preceding stage of a direct-current bus of the inverter; and the optimizer networking method includes:
setting, by the inverter, an output voltage limit value and/or an output current limit value for each of optimizers;
controlling, by the inverter, the optimizers to start;
controlling, by the inverter, input terminals of the Boost circuits to maintain a short-circuited state for a preset duration according to a preset rule; and
determining, by the inverter, the optimizers connected to the input terminals of the respective Boost circuits according to output electrical parameters of the optimizers in the short-circuited states.

In an embodiment, the controlling, by the inverter, the input terminals of the Boost circuits to maintain the short-circuited state for the preset duration according to the preset rule includes:
controlling, by the inverter, the input terminals of the Boost circuits one by one to maintain the short-circuited state for the preset duration; or
grouping, by the inverter, the Boost circuits, controlling input terminals of part of the Boost circuits in a current group to maintain the short-circuited state for the preset duration; and further grouping the Boost circuits in the current group according to states of the input terminals of the Boost circuits, until the current group includes one Boost circuit.

In an embodiment, the output electrical parameter includes an output voltage, and/or an output current.

In an embodiment, the determining, by the inverter, the optimizers connected to the input terminals of the respective Boost circuits according to output electrical parameters of the optimizers in the short-circuited state, includes:
in a case of an input terminal of one Boost circuit in the short-circuited state at a time, determining, by the inverter, that the optimizer with an output voltage equal to zero and/or an output current greater than a preset current or equal to the output current limit value is connected to the Boost circuit having the input terminal in the short-circuited state; determining, by the inverter, that the optimizers with an output voltage not equal to zero and/or an output current equal to zero is not connected to the Boost circuit having the input terminal in the short-circuited state.

In an embodiment, before the setting, by the inverter, an output voltage limit value and/or an output current limit value for each of optimizers, the optimizer networking method further includes:
acquiring, by the inverter, serial numbers of the optimizers in the photovoltaic strings;
determining, by the inverter, whether topological information entered manually is received;
performing the step of setting , by the inverter, the output voltage limit value and/or the output current limit value for each of the optimizers, in response to determining that the topological information is not received; and
determining, by the inverter, whether the serial numbers match the topological information, in response to determining that the topological information is received;
performing the step of setting , by the inverter, the output voltage limit value and/or the output current limit value for each of the optimizers, if it is determined that the serial numbers do not match the topological location information.

In an embodiment, if the inverter set the output voltage limit value for each of the optimizers, after the controlling, by the inverter, the optimizers to start, the optimizer networking method further includes:
controlling the output voltage of each of the optimizers to reach the output voltage limit value; and
before the controlling, by the inverter, the input terminals of the Boost circuits to maintain the short-circuited state for the preset duration according to the preset rule, the optimizer networking method further includes:
   determining, by the inverter, whether two terminals of each photovoltaic string are formed by connecting output terminals of the optimizers in the photovoltaic string in series, according to changes of the voltages at the input terminals of the Boost circuits before and after the optimizers are started; and
   determining, by the inverter, the number of the optimizers in the respective photovoltaic strings according to the voltages at the input terminals of the Boost circuits if it is determined that the two terminals of each photovoltaic string are formed by connecting the output terminals of the corresponding optimizers in series, and performing the step of controlling, by the inverter, the input terminal of the Boost circuits to maintain a short-circuited state for the preset duration according to the preset rule.

In an embodiment, before the controlling, by the inverter, the input terminals of the Boost circuits to maintain the short-circuited state for the preset duration according to the preset rule, the optimizer networking method further includes:
determining, by the inverter, whether a voltage at the direct-current bus is lower than a preset minimum threshold; and
controlling, by the inverter, at least one Boost circuit of the Boost circuits to charge the direct-current bus in response to the voltage at the direct-current bus being lower than the preset minimum threshold;
performing the step of the controlling, by the inverter, the input terminals of the Boost circuits to maintain the short-circuited state for the preset duration according to the preset rule, in a case that the voltage at the direct-current bus reaches the preset minimum threshold.

In an embodiment, the controlling, by the inverter, the optimizers to start includes:
sending, by the inverter, an activation instruction to the optimizers, where the optimizers enter an operating mode and increase the output voltage through soft start in response to the activation instruction.

In a second aspect of the present application, a photovoltaic system is provided. The photovoltaic system includes an inverter and at least one photovoltaic string.

An optimizer or at least two optimizers having output terminals connected in series are arranged between two terminals of the photovoltaic string, and an input terminal of each optimizer is connected to at least one photovoltaic component.

At least one Boost circuit is provided at a preceding stage of a direct-current bus of the inverter, and an input terminal of the Boost circuit is configured to be connected to the at least one photovoltaic string.

The inverter comprises a controller serving as a master node to communicate with the optimizer, and the controller is configured to perform the optimizer networking method for the photovoltaic system according to any one of the embodiments described in the first aspect.

In an embodiment, the Boost circuit is independent of the inverter; or
the Boost circuit is integrated in the inverter, and an output terminal of the Boost circuit is connected to a direct-current side of an inversion circuit in the inverter through the direct-current bus.

In an embodiment, the input terminal of the Boost circuit is connected to one connection port at a direct-current side of the inverter, or at least two connection ports connected in parallel at a direct-current side of the inverter; and
the connection port is connected to one photovoltaic string, or the connection port is connected in parallel to at least two photovoltaic strings through a bus bar terminal.

In the optimizer networking method for the photovoltaic system provided according to the present application, the inverter sets an output voltage limit value and/or an output current limit value for each optimizer; the inverter controls the optimizers to start; and the inverter controls input terminals of the Boost circuits to maintain a short-circuited state for a preset duration according to a preset rule. In a case of an input terminal of one Boost circuit in the short-circuited state at a time, only the photovoltaic strings connected to this Boost circuit are short-circuited. Thus, the optimizers with the changed output electrical parameter are provided in the corresponding photovoltaic string. The optimizers connected to the input terminals of the respective Boost circuits can be determined. The automatic networking for the optimizers in the photovoltaic system is implemented, avoiding the problem of low efficiency and error in the optimizer networking process due to the manual entry.

### BRIEF DESCRIPTION OF THE DRAWINGS

In order to more clearly illustrate technical solutions in embodiments of the present application or in the conventional technology, the drawings to be used in the description of the embodiments or the conventional technology are briefly described below. Apparently, the drawings in the following description show only embodiments of the present application, and other drawings may be obtained by those skilled in the art from the provided drawings without any creative work.
FIG. 1 to FIG. 4 are four flowcharts of an optimizer networking method for a photovoltaic system according to embodiments of the present application;
FIG. 5 is a schematic structural diagram of a photovoltaic system according to an embodiment of the present application;
FIG. 6 is a schematic structural diagram of a photovoltaic string according to an embodiment of the present application; and
FIG. 7 is a schematic diagram of a specific structure of a photovoltaic system according to an embodiment of the present application.

### DETAILED DESCRIPTION

Technical solutions of embodiments of the present application are clearly and completely described hereinafter in conjunction with the drawings of the embodiments of the present application. Apparently, the embodiments described in the following are only some embodiments of the present application, rather than all embodiments. Any other embodiments obtained by those skilled in the art based on the embodiments in the present application without any creative work fall in the scope of protection of the present application.

In the present application, terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

An optimizer networking method for a photovoltaic system is provided according to the present application, to avoid the problem of low efficiency and error in the optimizer networking process due to manual entry.

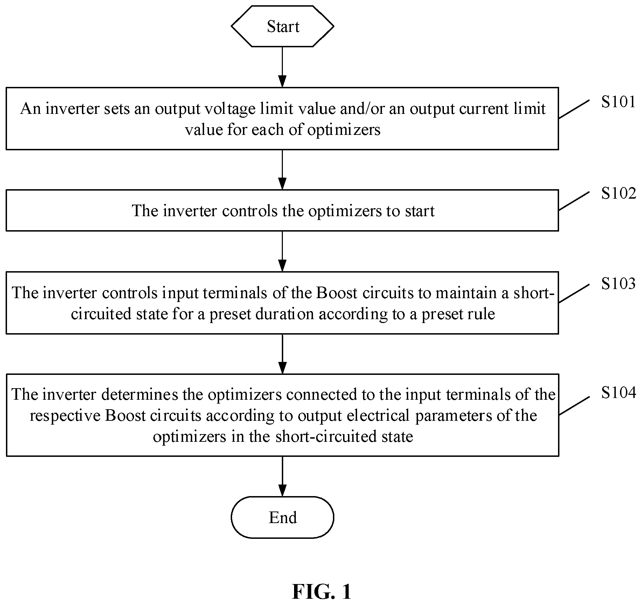

The photovoltaic system includes an inverter and photovoltaic strings connected to Boost circuits at a preceding stage of a direct-current bus of the inverter. Referring to FIG. 1, the optimizer networking method for the photovoltaic system includes step S101 to S104.

In step S101, the inverter sets an output voltage limit value and/or an output current limit value for each of optimizers.

In practice, after an optimizer has just been provided, the optimizer may in a safe mode or a shutdown mode when a photovoltaic component connected to an input terminal of the optimizer can provide a normal operation voltage for the optimizer. In this case, the optimizer has an output voltage of 1V. Then, a master node of the inverter sends a networking mode setting instruction to each optimizer. The networking mode setting instruction includes an output voltage limit value Ulmt and/or an output current limit value Ilmt, to set limits of the output voltage and output current for the optimizers. Moreover, the output voltage limit value Ulmt and the output current limit value Ilmt may be set according to the actual requirements, such as Ulmt=10V, Ilmt=2A, which will not be limited to herein.

If the inverter set the output voltage limit value Ulmt for each optimizer, in the case that the output voltage of each optimizer is equal to the output voltage limit value Ulmt, the voltage of a photovoltaic string formed by connecting output terminals of n optimizers in series is equal to n×Ulmt. The inverter can determine the number n of optimizers in the photovoltaic string connected to the input terminal of each Boost circuit by acquiring the voltage at the input terminal of each Boost circuit.

If the inverter set the output current limit value Ilmt for each optimizer, an output current of an optimizer will not exceed the output current limit value Ilmt in the case that the output terminal of the optimizer is short-circuited, ensuring the safety of the device.

In step S102, the inverter controls the optimizers to start.

In practice, the master node of the inverter broadcasts an activation instruction to the optimizers. After receiving the activation instruction, the optimizers switch into an operating mode, perform soft start, and gradually increase the output voltage thereof. If the inverter does not set the output voltage limit Ulmt to the optimizers, the optimizers can gradually increase the output voltage until the rated output voltage. If the inverter has set the output voltage limit Ulmt for each the optimizer, the inverter can further control the output voltage of each optimizer to reach the output voltage limit Ulmt after each optimizer is started, reducing the voltage and improve safety, as well as facilitating the subsequent determination.

In step S103, the inverter controls input terminals of the Boost circuits to maintain a short-circuited state for a preset duration according to a preset rule.

In the photovoltaic system, the main node of the inverter selects, according a preset sequence, such as a sequence of serial numbers of the Boost circuits in the software, a Boost circuit at the preceding stage of the direct-current bus of the inverter, and controls a voltage at the input terminal of the selected Boost circuit to gradually decrease to nearly 0V and maintain the short-circuited state for a duration Tshort. The speed of decreasing of the voltage and the maintaining duration of short-circuited state Tshort may be set according to actual requirements, which will not be limited herein. After the maintaining duration Tshort has ended, that is, after the preset duration, the main node of the inverter stops controlling the state of the Boost circuit, and the voltage at the input terminal of the Boost circuit is restored. Then, the main node of the inverter initiates a control on a next Boost circuit until the above control has been performed on all the Boost circuits meeting conditions. For example, a first Boost circuit is controlled to be in the short-circuited state for a duration and then be recovered, and a second Boost circuit is controlled to be in the short-circuited state for a duration and recovered, until control of all the Boost circuits is completed.

In practice, step S103 may be implemented through the above process, that is, the inverter controls the input terminals of the Boost circuits one by one to maintain the short-circuited state for the preset duration. Alternatively, the inverter groups the Boost circuits, controls input terminals of part of the Boost circuits in a current group to maintain the short-circuited state for the preset duration each time, and further groups the Boost circuits in the current group according to states of the input terminals of the Boost circuits, until the current group includes one Boost circuit. That is, the inverter divides all Boost circuits into two groups for a first time, controls the input terminals of the Boost circuits in the first group to be in the short-circuited state, and does not control the Boost circuits in the other group. Each of the two groups generated in the first time are divided into two sub-groups respectively. In each of the groups, the input terminals of the Boost circuits in the one sub-group are controlled to be in the short-circuited state, and the Boost circuits in the other sub-group are not controlled, and so on, until only one Boost circuit is included in each group. In practice, the input terminals of half of the Boost circuits in the current group can be controlled to be in the short-circuited state each time. For example, the input terminals of n/2 Boost circuits are controlled to be in the short-circuited state for a first time to obtain two groups. Then, the input terminals of n/4 Boost circuits in each of the two groups are controlled to be in the short-circuited state for a second time. For a third time, the input terminals of the n/8 Boost circuits in each of the four sub-groups in the second time are controlled to be in the short-circuited state, until each Boost circuit is divided in an independent group. The overall duration of step S103 can be reduced through this process, which is suitable for a case that the number of optimizers in the photovoltaic system is relatively large.

It should be noted that, the preset duration of maintaining the shorted-circuit state each time is preferably the same. Alternatively, it may be different, which depends on the specific application environment and falls within the protection scope of the present application.

In step S104, the inverter determines optimizers connected to the input terminals of the respective Boost circuits according to the output electrical parameters of the optimizers in the short-circuited state.

The output electrical parameters include an output voltage and/or an output current.

When the input terminal of a specific Boost circuit is in the short-circuited state, only the photovoltaic string connected to the input terminal of this Boost circuit is in the short-circuited state. Thus, the optimizers with changed output electrical parameters are provided in this photovoltaic string. In this way, the optimizers connected to the input terminals of respective Boost circuits are determined.

In an embodiment, the input terminal of one Boost circuit is controlled to be in the short-circuited state. If the output current limit value Ilmt and output voltage limit value Ulmt have been set for each optimizer, the optimizer connected to the input terminal of this Boost circuit will operate with the output voltage of 0V and the output current equal to the output current limit value Ilmt. The optimizer not connected to the input terminal of this Boost circuit maintains operating with the output voltage equal to the output voltage limit Ulmt and the output current of 0A. If the output current limit Ilmt is not set for each optimizer, the output voltage of the optimizer connected to the input terminal of this Boost circuit is equal to 0V, and the output current thereof is a short-circuited current greater than the preset current value. If the Ulmt output voltage limit is not set for each optimizer, the output current of the optimizer not connected to the input terminal of the Boost circuit is equal to 0A, and the output voltage is a rated voltage greater than 0V.

In each short-circuited state, the inverter determines that the optimizer with an output voltage equal to 0V and/or an output current greater than a preset current or equal to the output current limit value Ilmt is connected to the Boost circuit having the input terminal in the short-circuited state; and determines that the optimizer with an output voltage not equal to 0V and/or an output current equal to 0A is not connected to the Boost circuit having the input terminal in the short-circuited state.

Therefore, the inverter can determine all the optimizers connected to the input terminal of this Boost circuit according to different output voltages and/or different output currents of the optimizers.

According to the optimizer networking method of the photovoltaic system provided in this embodiment, three step including setting the output electrical parameters for the optimizers, controlling the optimizers to start, and controlling the input terminals of the Boost circuits to be short-circuited are performed. In the case that one Boost circuit is controlled to be in the short-circuited state, on the basis that the difference between the electrical state of the optimizers connected to this Boost circuit and electrical state of other optimizers, the optimizers connected to this Boost circuit can be automatically determined. The Boost circuits are controlled to be short-circuited in sequence, and the optimizer can be matched with the respective Boost circuits. The automatic networking of the optimizers in the photovoltaic system is implemented, avoiding the problem of low efficiency and error in the optimizer networking process due to the manual entry. Moreover, for an miscommunicated optimizer due to crosstalk that does not belong to the photovoltaic system, it can be found that the output electrical parameter of the miscommunicated optimizer does not change with the short-circuited state of any one input terminal of the inverter through the above steps, and thus the miscommunicated optimizer due to crosstalk that does not belong to the photovoltaic system can be determined.

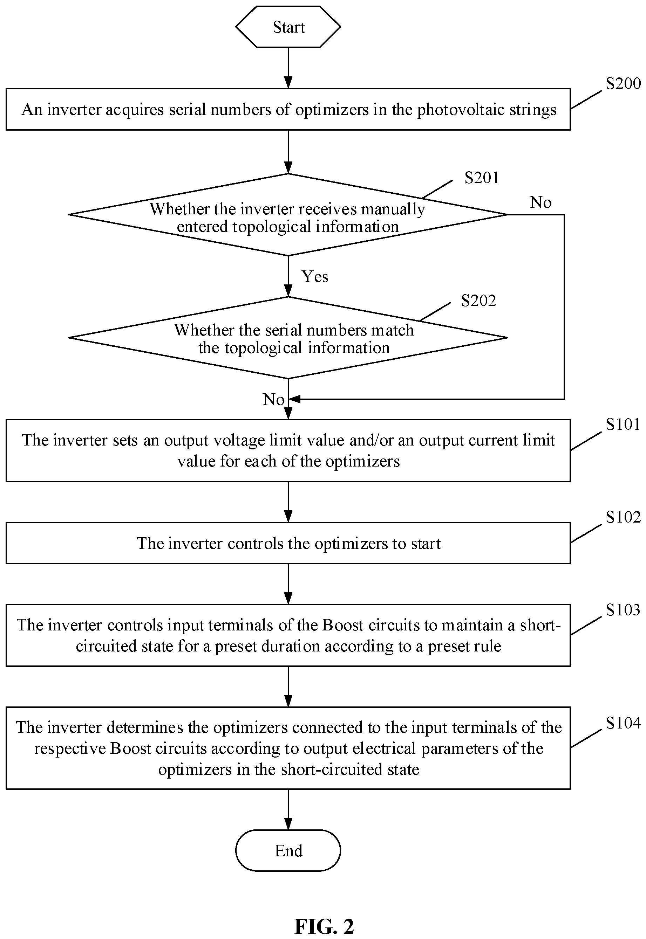

On the basis of the above embodiment, in an embodiment as shown in FIG. 2, before step S101 of setting, by the inverter, an output voltage limit value and/or an output current limit value for each of the optimizers, the optimizer networking method for the photovoltaic system further includes steps S200 to S202.

In step S200, the inverter acquires serial numbers of the optimizers in the photovoltaic strings.

The serial number refers to an SN number, namely serial no, which is a unique code of each optimizer. The inverter obtains the serial number of each optimizer to distinguish the optimizers.

In practice, once the master node of the inverter is powered on, the inverter actively searches for optimizers. That is, the inverter sends a search instruction to the optimizers. After receiving the search instruction from the inverter, the optimizer sends its serial number to the master node of the inverter.

In addition, after step S104, the topological information of each optimizer may be marked according to the serial number, to generate an automatic networking result for the provided optimizer.

In step S201, the inverter determines whether the manually entered topological information is received.

If the topological information is not received, step S101 is performed. If the topological information is received, step S202 is performed.

In step S202, the inverter determines whether the serial numbers match the topological information.

If it is determined that the serial number does not match the topological information, step S101 is performed.

That is, in step S200, the inverter obtains the serial numbers of the optimizers in the photovoltaic strings. If the master node of the inverter does not receive the manually entered topological information from the cloud, or the obtained serial number of the optimizer is inconsistent with the topological information, a subsequent automatic networking process is performed.

The starting trigger condition of the automatic networking process in practice is provided in this embodiment. If the starting trigger condition is not met, the automatic networking may not be performed. Thus, the networking process after the inverters are provided may be determined according to the actual situation, which broadens the application scene.

In practice, the starting trigger condition may include: directly sending, by the master node of the inverter, a networking mode setting instruction to the optimizers. In this case, the optimizer networking method for the photovoltaic system may be started by performing step S101. The steps of the optimizer networking method for the photovoltaic system may be determined according to specific application environment, which are all within the protection scope of the present application.

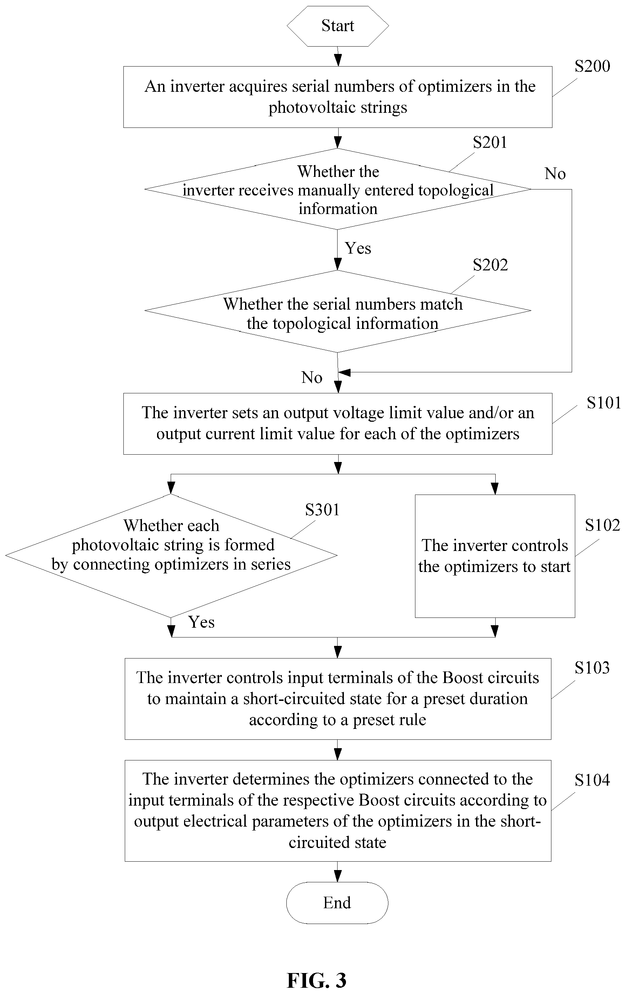

On the basis of the above embodiments, in an embodiment as shown in FIG. 3 (based on FIG. 2), if the output voltage limit Ulmt is set for the inverter in step S101, before step S103 of controlling the input terminals of the Boost circuits to maintain the short-circuited state for the preset duration according to the preset rule by the inverter, the optimizer networking method for the photovoltaic system further includes steps S301.

In step S301, the inverter determines whether two terminals of each photovoltaic string are formed by connecting output terminals of the optimizers in the photovoltaic string in series, according to changes of the voltages at the input terminals of the Boost circuits before and after the optimizers are started.

If the two terminals of the photovoltaic string are formed by connecting output terminals of the optimizers in this photovoltaic string in series, step S103 is performed.

In an embodiment, when the optimizers are started in step S102 and the optimizers are still in a safe mode with an output voltage of 1V, the master node of the inverter reads and records the voltage at each input terminal of the inverter. Then the master node of the inverter controls the optimizers to start, so that the output voltages of the optimizers reach the output voltage limit value Ulmt. After all the optimizers are started, the master node of the inverter reads and records the voltage at each input terminal of the inverter again.

Then, the main node of the inverter performs calculation based on the above recorded voltages before and after the optimizers are started, to determine that each photovoltaic string connected to the input terminals of the inverter is provided with a corresponding optimizer. Then, the main node of the inverter continues to perform the subsequent short circuit control step on the Boost circuits, so as to implement the automatic networking process.

For example, the optimizer outputs a voltage of 1V in a safe mode, and outputs the output voltage limit value Ulm=10V in the operating mode. If an input terminal of the inverter has a voltage equal to nV in the safe mode of the optimizer and has a voltage equal to 10nV in the operating mode of the optimizer, it is indicated that two terminals of the photovoltaic string connected to this input terminal are formed by connecting the output terminals of n optimizers in series. If each input terminal of the inverter is the same as the case described above, it is indicated that each photovoltaic component in this photovoltaic system is provided with the corresponding optimizer, and the above automatic networking process for the optimizers can be performed.

In addition, for the photovoltaic system in which each photovoltaic component should be provided with the corresponding optimizer, the above method may further be determined whether each optimizer is normally provided and can operate normally. If it is determined from the above calculation that recorded voltages of an input terminal of the inverter before and after the optimizers are started do not show the above corresponding relationship, the subsequent steps of automatic networking are not performed, and an alarm signal is output to promp operators to check the quality and arrangement of each optimizer connected to the corresponding input terminal of the inverter. The automatic networking process may be performed after all the optimizers are arranged and operate normally, ensuring the correctness of the networking result.

In addition, after step S301, if the two terminals of each photovoltaic string are formed by connecting the output terminals of the optimizers in the photovoltaic string in series, the inverter further determines the number of optimizers in the photovoltaic string according to the voltage at the input terminal of the Boost circuit connected to the photovoltaic string.

Further, the number of optimizers in the photovoltaic strings connected to the respective Boost circuits can be determined through the above recorded voltages and output voltage limit value Ulm, to be used for subsequent control.

It should be noted that in the above step of performing short circuit control on the Boost circuits, if a drive module of Boost circuit is powered by the direct-current bus between Boost circuit and inversion circuit, the voltage at the direct-current bus will decrease due to the power consumption of the drive module when the Boost circuit is in the short-circuited state. Therefore, in order to prevent the drive signal of the drive module from being missed due to an excessively low voltage at the direct-current bus in the process of controlling the Boost circuit to be short circuited, a minimum threshold Ulowthd may be set for the voltage at the direct-current bus. Before controlling the Boost circuit to be short circuited, the voltage at the direct-current bus should be determined first. If it determined that the voltage at the direct-current bus is lower than the minimum threshold Ulowthd, the Boost circuit is controlled to charge the direct-current bus first. When the voltage at the direct-current bus is charged to the minimum threshold Ulowthd, the short circuit control is performed on the Boost circuit.

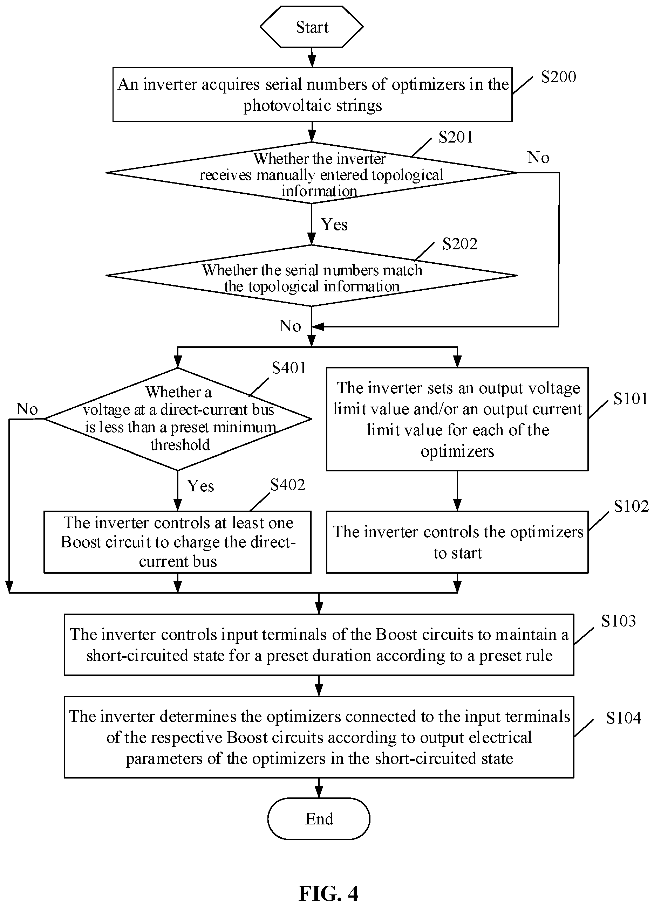

On the basis of the above embodiment, in an embodiment as shown in FIG. 4 (taking the embodiment based on FIG. 2 as an example), before step S103, the controlling the input terminals of the Boost circuits to maintain the short-circuited state for the preset duration according to the preset rule by the inverter, the optimizer networking method further includes step S401 and S402.

In step S401, the inverter determines whether the voltage at the direct-current bus is less than the preset minimum threshold.

If the voltage at the direct-current bus is lower than the preset minimum threshold (that is, minimum threshold Ulowthd as described above), step S402 is performed. If the voltage at the direct-current bus is higher than or equal to the preset minimum threshold, step S103 is directly performed.

In step S402, the inverter controls at least one Boost circuit to charge the direct-current bus.

Step S103 is performed when the voltage at the direct-current bus reaches the preset minimum threshold.

In this embodiment, the successfully performing of step S103 can be ensured, avoiding the problem that the drive module stops driving due to the loss of power supply during the performing process.

FIG. 3 is taken as an example to illustrate a process of implementing automatic networking for the photovoltaic system in which each photovoltaic component is provided with a corresponding optimizer through the above optimizer networking method.
(1) The automatic networking method may be performed under certain triggering conditions.
   Once the main node of the inverter is powered on, the main node of the inverter actively searches for optimizers. In response to receiving a search instruction from the inverter, the optimizer sends its serial number to the main node of the inverter. In the case that the master node of the inverter does not receive the manually entered topological information from a cloud, or the searched serial number of the optimizer is inconsistent with the topological information, the automatic networking process is performed.
(2) In the automatic networking process, the output electrical parameters of the optimizers are set firstly.
   After the optimizers have just been provided, the optimizer enter a safe mode or a shutdown mode when the photovoltaic components connected to the input terminals of the optimizers can provide a normal operating voltage of the optimizers. In this case, the output voltage of each optimizer is 1V. The master node of the inverter sends a networking mode setting instruction to each optimizer. The networking mode setting instruction includes an output voltage limit value Ulmt and an output current limit value Ilmt.
(3) The step of controlling the optimizers to start in the automatic networking process is performed.

Before starting, the optimizer is still in the safe mode with an output voltage of 1V. The master node of the inverter reads and records the voltage at each input terminal of the inverter in this case. The master node of the inverter broadcasts an activation instruction, and the optimizer switches into the operating mode in response to receiving the activation instruction, performs soft start, and gradually increases the output voltage until the output voltage limit Ulmt. When all the optimizers are started, the master node of the inverter reads and records the voltage at each input terminal of the inverter again.

Then, the master node of the inverter performs calculation based on the recorded voltages before and after the optimizers are started, to determine that all photovoltaic components in the photovoltaic strings connected to the input terminals of the inverter are provided with the corresponding optimizers.

(4) The short circuit control step is performed on the input terminals of the Boost circuits in the automatic networking process.

In this step, the master node of the inverter selects one Boost circuit in turn according to a preset sequence, and controls the voltage at the input terminal of the selected Boost circuit to gradually decrease to nearly 0V and maintain a short-circuited state for a duration Tshort. The speed of decreasing of the voltage and the maintaining duration of short-circuited state Tshort may be set according to actual requirements, which will not be limited herein. After the maintaining duration Tshort has ends, the main node of the inverter stops controlling the state of the Boost circuit, and the voltage at the input terminal of the Boost circuit is restored. The main node of the inverter initiates a control on a next Boost circuit until the above control has been performed on all the Boost circuits meeting conditions.

In the short circuit control step for the input terminal of each Boost circuit, when the input terminal of each Boost circuit is controlled to be a short-circuited state, the master node of the inverter needs to collect the output voltage and output current states of all optimizers. Since the output current limit value Ilmt has been set for the optimizers, the optimizer connected to the input terminal of this Boost circuit will operate with the output voltage of 0V and the output current limit value Ilmt. The optimizer not connected to the input terminal of this Boost circuit maintains operating with the output voltage equal to the output voltage limit Ulmt and the output current of 0A. According to the difference between the above states, all the optimizers connected to the input terminal of this Boost circuit can be determined.

According to this embodiments applicable to the automatic networking process of the photovoltaic system in which the photovoltaic components are provided with the corresponding optimizers, the optimizer connected to the input terminal of each Boost circuit can be automatically identified, and the searched optimizer due to crosstalk can be excluded, implementing the automatic networking of the optimizers provided in the system. The process of manually entering the information of each optimizer is avoided, the efficiency of networking is improved and the probability of errors is reduced.

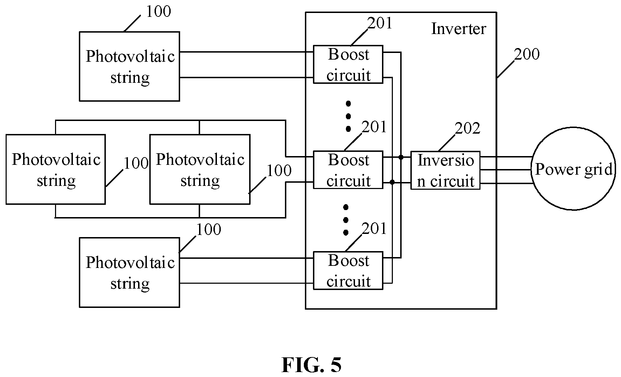

In another embodiment of the present application, a photovoltaic system is provided. As shown in FIG. 5, the photovoltaic system includes an inverter 200 and at least one photovoltaic string 100.

At least one Boost circuit 201 is provided at a preceding stage of a direct-current bus of the inverter 200, and an input terminal of the Boost circuit 201 is configured to be connected to at least one photovoltaic string 100.

It should be noted that, as shown in FIG. 5, each Boost circuit 201 may be integrated in the inverter 200, and an output terminal of each Boost circuit 201 is connected to a direct-current side of the inverter circuit 202 in the inverter 200 through the direct-current bus. In practice, the Boost circuit 201 may be independent of the inverter 200 (not shown in drawings), which depends on specific application environment and falls within the protection scope of the present application.

The inverter 200 is connected to an applicable single-phase or three-phase grid according to models of the inverter 200.

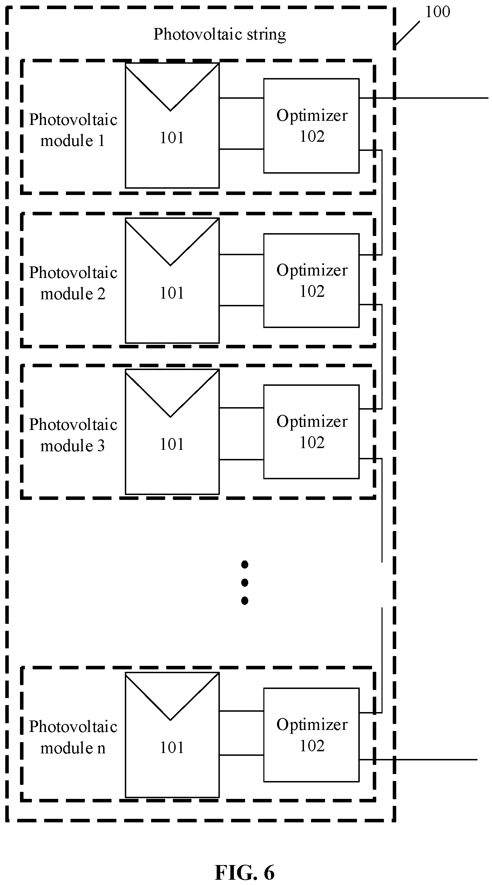

As shown in FIG. 6, an optimizer 102 or at least two optimizers 102 having output terminals connected in series are arranged between two terminals of the photovoltaic string 100, and the input terminal of the optimizer 102 is connected to at least one photovoltaic component 101.

The inverter 200 includes a controller serving as a master node of the inverter in the embodiments above. The controller communicates with the optimizers 102 and is configured to perform the optimizer networking method for the photovoltaic system described according to any one of the above embodiments. The specific execution process and principles of the optimizer networking method may be referred to the above embodiments, which will not be repeated herein.

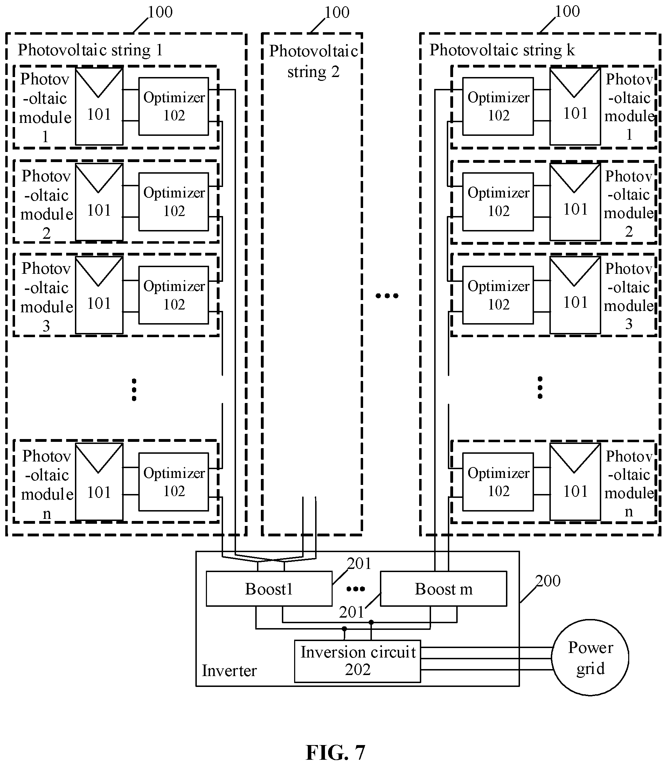

As shown in FIG. 5 and FIG. 7, the main circuit of the inverter 200 includes an inversion circuit 202 and at least one Boost circuit 201. The inverter 200 may include m Boost circuits (Boost 1 to Boost m shown in FIG. 7), where m is a positive integer greater than or equal to 1.

In practice, the input terminal of each Boost circuit 201 may be connected to one connection port of the direct-current side of the inverter 200, or may be connected to at least two connection ports connected in parallel at the direct-current side of the inverter 200. The settings of input terminals of different Boost circuits 201 may be the same or different, which depends on the specific application environment and falls within the protection scope of the present application. The connection port connected to the input terminal of each Boost circuit 201 may be connected to one photovoltaic string 100, or may be connected in parallel to at least two photovoltaic strings 100 through a bus bar terminal, which depends on the specific application environment and falls within the protection scope of the present application.

In an embodiment, each Boost circuit 201 includes an input terminal, which may be called an MPPT port. Each MPPT port may be divided into two parallel-connected connection ports inside the inverter 200. The parallel-connected connection port may be called PV ports. Alternatively, each MPPT port may directly serve as a PV port. Each PV port may be connected to a photovoltaic string 100, or may be connected to two photovoltaic strings 100 connected in parallel through the bus bar terminal. At least one photovoltaic string 100 may be arranged in the system.

Referring to FIG. 6 and FIG. 7, it is assumed that each photovoltaic string 100 includes n photovoltaic modules (photovoltaic module 1 to photovoltaic module n as shown in FIG. 6 and FIG. 7), n is a positive integer greater than or equal to 2. n is less than or equal to 25 in a case that the inverter 200 is a single-phase inverter. n is less than or equal to 50 in a case that the inverter 200 is a three-phase inverter. Since each photovoltaic module is provided with an optimizer 102 in the system, each photovoltaic module includes a photovoltaic unit and an optimizer 102. The photovoltaic unit includes at least one photovoltaic component 101. The photovoltaic unit is connected to the input terminal of the optimizer 102. The output terminals of all optimizers 102 in the photovoltaic string 100 are connected in series with each other. That is, an optimizer 102 includes a positive output terminal connected to a negative output terminal of a previous optimizer 102, and a negative output terminal connected to a positive output terminal of a next optimizer 102. An output terminal of the last optimizer in the photovoltaic string is connected to a PV port of the inverter 200.

It should be noted that, the number of photovoltaic modules in different photovoltaic strings 100 arranged in the same system may be different, the series-parallel connection mode of photovoltaic strings 100 connected to different MPPT ports may be inconsistent, and the powers of photovoltaic units may be inconsistent.

In practice, referring to FIG. 7, k photovoltaic strings 100 (photovoltaic string 1 to photovoltaic k as shown in FIG. 7) are connected to m Boost circuits 201 of an inverter 200. The MPPT ports of respective Boost circuits 201 may not be connected to a photovoltaic string 100, or may be connected to 1 to 3 photovoltaic strings 100, which depends on the specific application environment and falls within the protection scope of the present application.

The same or similar parts among the embodiments in the present application may be referred to each other, and each of the embodiments emphasizes differences from other embodiments. In particular, the system or system embodiment is substantially similar to the method embodiment, and therefore is described relatively briefly. For relevant details, reference can be made to the description of the method embodiment. The system and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the purpose of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the components and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present application.

Based on the above description of the disclosed embodiments, the features described in the different embodiments in the present application may be replaced or combined with each other, so that those skilled in the art can implement or use the present application. Various modifications to these embodiments will be apparent by those skilled in the art, and the generic principles defined herein may be implemented in other embodiments without departing from the spirit or scope of the present application. Therefore, the present application is not limited to the embodiments described herein, but should be in accordance with the broadest scope consistent with the principle and novel features disclosed herein.

## Claims

1. An optimizer networking method for a photovoltaic system, wherein the photovoltaic system comprises an inverter and photovoltaic strings connected to Boost circuits at a preceding stage of a direct-current bus of the inverter; and the optimizer networking method comprises:
setting, by the inverter, an output voltage limit value and/or an output current limit value for each of optimizers;
controlling, by the inverter, the optimizers to start;
controlling, by the inverter, input terminals of the Boost circuits to maintain a short-circuited state for a preset duration according to a preset rule; and
determining, by the inverter, the optimizers connected to the input terminals of the respective Boost circuits according to output electrical parameters of the optimizers in the short-circuited state.

2. The optimizer networking method for the photovoltaic system according to claim 1, wherein the controlling, by the inverter, the input terminals of the Boost circuits to maintain the short-circuited state for the preset duration according to the preset rule comprises:
controlling, by the inverter, the input terminals of the Boost circuits one by one to maintain the short-circuited state for the preset duration; or
grouping, by the inverter, the Boost circuits, controlling input terminals of part of the Boost circuits in a current group to maintain the short-circuited state for the preset duration, and further grouping the Boost circuits in the current group according to states of the input terminals of the Boost circuits until the current group comprises one Boost circuit.

3. The optimizer networking method for the photovoltaic system according to claim 1, wherein the output electrical parameters comprise: an output voltage and/or an output current.

4. The optimizer networking method for the photovoltaic system according to claim 3, the determining, by the inverter, the optimizers connected to the input terminal of the respective Boost circuits according to the output electrical parameters of the optimizers in the short-circuited state, comprises:
in a case of an input terminal of one Boost circuit in the short-circuited state at a time, determining, by the inverter, that the optimizer with an output voltage equal to zero and/or an output current greater than a preset current or equal to the output current limit value is connected to the Boost circuit having the input terminal in the short-circuited state; determining, by the inverter, that the optimizer with an output voltage not equal to zero and/or an output current equal to zero is not connected to the Boost circuit having the input terminal in the short-circuited state.

5. The optimizer networking method for the photovoltaic system according to any one of claims 1 to 4, wherein before the setting, by the inverter, the output voltage limit value and/or the output current limit value for each of the optimizers, the optimizer networking method further comprises:
acquiring, by the inverter, serial numbers of the optimizers in the photovoltaic strings;
determining, by the inverter, whether topological information entered manually is received;
performing the step of setting, by the inverter, the output voltage limit value and/or the output current limit value for each of the optimizers, in response to determining that the topological information is not received;
determining, by the inverter, whether the serial numbers match the topological information, in response to determining that the topological information is received; and
performing the step of setting, by the inverter, the output voltage limit value and/or the output current limit value for each of the optimizers, if it is determined that the serial numbers do not match the topological information.

6. The optimizer networking method for the photovoltaic system according to any one of claims 1 to 4, wherein if the inverter set the output voltage limit value for each of the optimizers, after the controlling, by the inverter, the optimizers to start, the optimizer networking method further comprises:
controlling the output voltage of each of the optimizers to reach the output voltage limit value; and
before the controlling, by the inverter, the input terminal of the Boost circuits to maintain a short-circuited state for a preset duration according to the preset rule, the optimizer networking method further comprises:
determining, by the inverter, whether two terminals of each photovoltaic string are formed by connecting output terminals of the optimizers in the photovoltaic string in series, according to changes of the voltages at the input terminals of the Boost circuits before and after the optimizers are started,
determining, by the inverter, the number of the optimizers in the respective photovoltaic strings according to the voltages at the input terminals of the Boost circuits if it is determined that the two terminals of each photovoltaic string are formed by connecting the output terminals of the optimizers in the photovoltaic string in series, and performing the step of controlling, by the inverter, the input terminals of the Boost circuits to maintain the short-circuited state for the preset duration according to the preset rule.

7. The optimizer networking method for the photovoltaic system according to any one of claims 1 to 4, wherein before the controlling, by the inverter, the input terminals of the Boost circuits to maintain the short-circuited state for the preset duration according to the preset rule, the optimizer networking method further comprises:
determining, by the inverter, whether a voltage at the direct-current bus is lower than a preset minimum threshold;
controlling, by the inverter, at least one Boost circuit of the Boost circuits to charge the direct-current bus, in response to the voltage at the direct-current bus being lower than the preset minimum threshold; and
performing the step of the controlling, by the inverter, the input terminals of the Boost circuits to maintain the short-circuited state for the preset duration according to the preset rule, in a case that the voltage at the direct-current bus reaches the preset minimum threshold.

8. The optimizer networking method for the photovoltaic system according to any one of claims 1 to 4, wherein the controlling, by the inverter, the optimizers to start comprises:
sending, by the inverter, an activation instruction to the optimizers, wherein the optimizers enter an operating mode and increase the output voltage through soft start in response to the activation instruction.

9. A photovoltaic system, comprising an inverter and at least one photovoltaic string, wherein
an optimizer or at least two optimizers having output terminals connected in series are arranged between two terminals of the photovoltaic string, and an input terminal of each optimizer is connected to at least one photovoltaic component;
at least one Boost circuit is provided at a preceding stage of a direct-current bus of the inverter, and an input terminal of the Boost circuit is configured to be connected to the at least one photovoltaic string; and
the inverter comprises a controller serving as a master node to communicate with the optimizer, and the controller is configured to perform the optimizer networking method for the photovoltaic system according to any one of claims 1 to 8.

10. The photovoltaic system according to claim 9, wherein the Boost circuit is independent of the inverter; or
the Boost circuit is integrated in the inverter, and an output terminal of the Boost circuit is connected to a direct-current side of an inversion circuit in the inverter through the direct-current bus.

11. The photovoltaic system according to claim 9 or 10, wherein the input terminal of the Boost circuit is connected to one connection port at a direct-current side of the inverter, or at least two connection ports connected in parallel at a direct-current side of the inverter; and
the connection port is connected to one photovoltaic string, or the connection port is connected in parallel to at least two photovoltaic strings through a bus bar terminal.
